# EUROPÄISCHE PATENTSCHRIFT

(11) **EP 0 735 991 B1**
(45) Veröffentlichungstag und Bekanntmachung des Hinweises auf die Patenterteilung: **06.06.2001**
(21) Anmeldenummer: 95934605.7
(22) Anmeldetag: 16.10.1995
(51) Int. Cl.: C06B 47/02, C06D 5/08, C06B 43/00

(54) **VERFAHREN ZUM BETREIBEN EINES NACH DEM RÜCKSTOSSPRINZIP ARBEITENDEN ANTRIEBES EINES FLUGKÖRPERS SOWIE FLUGKÖRPERANTRIEB**
PROCESS FOR OPERATING A REACTION-TYPE MISSILE PROPULSION SYSTEM AND MISSILE PROPULSION SYSTEM
PROCEDE PERMETTANT DE FAIRE FONCTIONNER UN SYSTEME DE PROPULSION DU TYPE A REACTION POUR MISSILE, ET SYSTEME DE PROPULSION DE MISSILE

(30) Priorität: 20.10.1994 DE 4437524
(43) Veröffentlichungstag der Anmeldung: 09.10.1996
(73) Patentinhaber: Kunkel, Klaus, 40882 Ratingen (DE)
(72) Erfinder: PLICHTA, Peter, D-40225 Düsseldorf (DE)
(74) Vertreter: Patentanwälte Hauck, Graalfs, Wehnert, Döring, Siemons
(86) Internationale Anmeldenummer: DE9501431
(87) Internationale Veröffentlichungsnummer: WO9612688

(56) Entgegenhaltungen:
- EP-A- 0 488 858
- DE-A- 2 231 008
- DE-A- 4 215 835
- FR-A- 2 526 086
- GB-A- 2 147 052
- GB-A- 2 196 394
- US-A- 2 397 834
- US-A- 2 883 829
- US-A- 3 413 810
- US-A- 3 719 046
- JOURNAL OF SPACECRAFT AND ROCKETS, Bd. 10, Nr. 8, August 1973 Seiten 493-495, K. BERMAN ET AL. 'Additives for Heat-Transfer Reduction in the Propellant Combinations N2O4-MMH and N2O4-A-50'

## Beschreibung

Die vorliegende Erfindung ist auf ein Verfahren zum Betreiben eines nach dem Rückstoßprinzip arbeitenden Antriebes eines Flugkörpers gerichtet. Sie bezieht sich ferner auf die Ausbildung des Flugkörperantriebes.

In der Raketentechnik wird für solche Fälle, die hohe spezifische Impulse erfordern, in der Regel Flüssigwasserstoff als Brennstoff herangezogen und mit Oxidatoren, wie Flüssigsauerstoff und Flüssigfluor, (außerhalb der Atmosphäre) zur Reaktion gebracht. Bei diesen Treibstoffkombinationen steht jedoch dem hohen spezifischen Impuls der Bedarf großer Behältervolumina für die Treibstoffkomponenten und der besondere Aufwand für deren Lagerung gegenüber. Die großen Behältervolumina sind eine Folge der niedrigen spezifischen Dichte der genannten Treibstoffkombinationen, für die in erster Linie der Wasserstoff verantwortlich ist. Der besondere Aufwand für die Lagerung resultiert aus den extrem niedrigen Siedepunkten der Treibstoffkomponenten.

Zur Behebung der vorstehend geschilderten Nachteile hat man bereits die Verwendung von Siliciumwasserstoff und Sililamin als Raketenbrennstoff vorgeschlagen (DE-A 22 31 008). Hierbei wurde Tetrasilan (Si₄H₁₀) genannt. Tetrasilan ist jedoch extrem selbstentzündlich und kann nicht auf einfache Weise dargestellt werden.

Auch in der DE 42 15 835 C2 sind bereits Siliciumwasserstoffe, vorzugsweise Silanöle, als Raketenbrennstoffe vorgeschlagen worden. Die Darstellung von derartigen Silanölen ist in der DE-C 21 39 155 beschrieben, wobei insbesondere die Darstellung des Ölgemisches Si₅H₁₂ bis Si₁₀H₂₂ beschrieben wird. Erstaunlicherweise sind derartige Silanöle handhabungssicher und wegen ihrer hohen spezifischen Dichte und ihrer hohen Energie besonders gut als Raketentreibstoff geeignet. Diese Handhabungssicherheit ist überraschend, da die niedrigen Silane wegen ihrer ungewöhnlichen Gefährlichkeit als Treibstoffe ausscheiden.

Auch bei diesen Vorschlägen wurde jedoch immer davon ausgegangen, daß die Silanöle zusammen mit flüssigem Sauerstoff, flüssigem Chlor oder Fluor verbrannt werden, so daß auch hierbei das Oxidationsmittel prinzipiell immer mitgeführt werden muß.

In "JOURNAL OF SPACECRAFT AND ROCKETS", Bd. 10 Nummer 8 , August 1973, S. 493-495 ist ein Raketenantrieb beschrieben, bei dem Silane und andere Siliciumverbindungen als Additive eingesetzt werden, die einen sich kontinuierlich erneuernden Überzug auf der Oberfläche des Antriebs bilden, der den Wärmefluß signifikant reduziert. Dabei wurde festgestellt, daß der gewünschte Überzug in erster Linie aus Siliciumdioxid bestand. Offensichtlich laufen daher hier die üblichen Oxidationsreaktionen ab. Die Silane werden lediglich als Additive zugesetzt und nicht als Treibstoff verwendet. Beispielsweise wird ein Prozent Silicium zugesetzt.

In der GB-A-2147052 ist ein Raketenbrennstoff und in Verbindung damit ein Raketenantrieb beschrieben. Der Raketenantrieb besitzt einen Treibstoffbehälter, von dem eine Leitung zur Brennkammer führt. Ferner finden ein Oxidationsmittel zum Verbrennen des Brennstoffes durch Oxidation in der Brennkammer und eine Quelle von unter hohem Druck stehender Luft, die in die Brennkammer eingeführt wird, um die Verbrennung des Brennstoffes zu verbessern, Verwendung. Spezielle Brennstoffe sind hierbei nicht genannt.

Der Erfindung liegt die Aufgabe zugrunde, ein Verfahren zum Betreiben eines nach dem Rückstoßprinzip arbeitenden Antriebes eines Flugkörpers zu schaffen, das sich durch einen besonders hohen Wirkungsgrad auszeichnet.

Diese Aufgabe wird erfindungsgemäß durch ein Verfahren nach Patentanspruch 1 gelöst.

Das N₂-Molekül als solches ist trotz seiner Dreifachbindung extrem träge und neigt nur bei Elektronenbeschuß, beispielsweise bei Gewittern, dazu, seine Bindung zu öffnen und mit Sauerstoff zu Stickoxiden zu reagieren. Heißer Stickstoff reagiert jedoch oberhalb von 1400°C mit fein verteiltem Silicium zu Siliciumnitrid Si₃N₄. Die Gründe für diese Stickstoffverbrennung liegen in der Tatsache, daß Siliciumim GegensatzzumKohlenstoff keine Doppel- oder Dreifachbindungen eingehen kann. Ein besonders gutes Reaktionsverhalten zeigt Stickstoff mit Siliciumwasserstoffverbindungen. Die Erfindung macht sich diese Erkenntnis zunutze und setzt gezielt Stickstoff oder Stickstoffverbindungen zur Reaktion mit Silanölen ein, wodurch sich ein besonders wirksamer Antrieb erreichen läßt. Stickstoff steht in großen Mengen, insbesondere in der Atmosphäre, zur Verfügung, so daß sich ein hoher Wirkungsgrad bei niedrigen Kosten ergibt.

Besondere Vorteile werden erreicht, wenn der Stickstoff der Erdatmosphäre für die Reaktion eingesetzt wird. In diesem Fall muß der Flugkörper kein Oxidationsmittel für die Silanöle mitführen, da die Erdatmosphäre zu etwa 80 % aus Stickstoff (N₂) besteht. Bei dieser Verfahrensvariante wird daher Luft, insbesondere komprimierte Luft, in die Brennkammer des Flugkörpers eingeführt und mit den Silanölen zur Reaktion gebracht.

Bei der Verbrennung von Silanölen mit komprimierter Luft reagiert der Sauerstoffanteil mit dem Wasserstoff der Silankette nach der Gleichung

4H + O₂ = 2H₂O.

Bei dieser Wasserstoff-Sauerstoff-Verbrennung werden Temperaturen von ca. 3000°C erreicht. Diese Temperatur ist ausreichend, um das N₂-Molekül, das durch die Zufuhr der komprimierten Luft zur Verfügung gestellt wird, zu spalten. Nach der Gleichung

4N + 3Si = Si₃N₄

greifen die Stickstoffradikale nun mit extremer Heftigkeit die freien Siliciumatome an. Es bildet sich Siliciumnitrid, das ein Molekulargewicht von 117 hat und damit fast dreimal so schwer ist wie Kohlendioxid. Die entsprechende Rückstoßwirkung ist daher im Vergleich zum Stand der Technik wesentlich verbessert.

Es versteht sich, daß die geschilderte Reaktion nur bei entsprechend hohen Temperaturen abläuft. An Luft verbrennen Silanöle nach Zündung lediglich zu rotbraunamorphem Siliciummonoxid, da der Verbrennungssubstanz bei der Blitzartigkeit der Verbrennung zu wenig Sauerstoff zur Verfügung steht. Die Reaktion mit Stickstoff unterbleibt, da Stickstoff unter diesen Bedingungen keine freien Radikale bildet.

Das erfindungsgemäße Verfahren kann sowohl zum Betreiben von Raumfahrzeugen als auch zum Betreiben von Flugkörpern in der Erdatmosphäre eingesetzt werden. Für den erstgenannten Fall müssen der Stickstoff und das Oxidationsmittel , da sie im Raum nicht zur Verfügung stehen, als "Oxidationsmittel" mitgeführt werden. Im zweiten Fall kann jedoch, wie vorstehend erwähnt, auf den in der Erdatmosphäre vorhandenen Stickstoff zurückgegriffen werden, so daß sich hierdurch gegenüber üblichen Strahlturbinen, die nur ca. 20 % der Erdatmosphäre zur Verbrennung nutzen können, wesentliche Vorteile ergeben, da zur Verbrennung nicht nur auf ca. 20 % der Atmosphäre (O₂-Gehalt), sondern auch auf die weiteren ca. 80 % (N₂-Gehalt) zurückgegriffen werden kann. Das durch die Stickstoffverbrennung überwiegend gebildete Siliciumnitrid (Si₃N₄) besitzt ein wesentlich höheres Molekulargewicht als das bei Strahlturbinen des Standes der Technik entstehende Kohlendioxid, wodurch ein besonders guter Wirkungsgrad des Antriebes erreicht wird, da nach der Impulsgleichung nicht nur die Geschwindigkeit, sondern ebenfalls die Masse der Gase eine Rolle spielt.

In Weiterbildung des erfindungsgemäßen Verfahrens werden zusätzlich zur Luft Stickstoffverbindungen in die Brennkammer eingeführt. Diese Verfahrensvariante ist insbesondere dann von Vorteil, wenn in großen Höhen (mit abnehmender Dichte der Atmosphäre) eine effektive Stickstoffverbrennung aufrechterhalten werden soll. Es werden dann beispielsweise flüssiges N₂O₄ oder Salpetersäure HNO₃ in die Brennkammer eingeführt. Je nach Einsatzgebiet sieht die Erfindung daher vor, daß vorzugsweise auf den in der Erdatmosphäre enthaltenen Stickstoff zur Verbrennung zurückgegriffen wird. Wenn dieser jedoch nicht oder nur eingeschränkt zur Verfügung steht, werden Stickstoff bzw. Stickstoffverbindungen im Flugkörper mitgeführt und für die Verbrennung eingesetzt.

Die Reaktion läßt man vorzugsweise bei einer Temperatur oberhalb von 1400°C ablaufen, da unterhalb dieses Wertes eine Verbrennung der Silanöle mit Stickstoff nur schwer bzw. überhaupt nicht zu verwirklichen ist. Vorzugsweise wird mit erhöhten Temperaturen von 2500 - 3000°C gearbeitet, die bei der Wasserstoff-Sauerstoff-Verbrennung entstehen, die durch die Reaktion des Sauerstoffanteils der Erdatmosphäre mit dem Wasserstoffanteil der Silanketten der Silanöle resultiert.

Für das erfindungsgemäße Verfahren finden Silanöle, und zwar insbesondere solche mit einer Kettenlänge von Si₅H₁₂ bis Si₉H₂₀, Verwendung. Derartige Silanöle sind in der bereits erwähnten DE-PS 21 39 155 beschrieben. Erstaunlicherweise sind derartige langkettige Silane an Luft nicht mehr selbst entzündlich. Sie besitzen die Konsistenz von Paraffinölen und sind großtechnisch einfach herzustellen. Sie sind pumpbar, so daß sie ohne Probleme einer geeigneten Brennkammer zugeführt werden können.

Die Erfindung betrifft ferner einen Antrieb eines Flugkörpers zur Durchführung des vorstehend wiedergegebenen Verfahrens. Dieser Antrieb ist dadurch gekennzeichnet, daß er als Raketentriebwerk ausgebildet ist und eine Brennkammer, eine in die Brennkammer führende Zuführleitung für die Silanöle, eine in die Brennkammer führende Zuführleitung für den Stickstoff und/oder die Stickstoffverbindungen und eine in die Brennkammer führende Zuführleitung für das Oxidationsmittel aufweist.

Vorzugsweise ist die Zuführleitung für den Stickstoff und/oder die Stickstoffverbindungen und/oder das Oxidationsmittel an eine Quelle komprimierter Luft angeschlossen. Die Luft wird dabei zweckmäßigerweise der den Flugkörper umgebenden Atmosphäre entnommen, mit Hilfe von Verdichtern komprimiert und in die Brennkammer eingespeist. Die Einspeisung erfolgt vorzugsweise ringförmig in die Brennkammer, während die Silanöle vorzugsweise in die Mitte des Rings eingespeist werden. Im übrigen ist der Antrieb als bekanntes Raketentriebwerk ausgebildet und weist eine entsprechende Austrittsöffnung für die Verbrennungsgase auf, die mit einer Verengung zur Erhöhung der Gasgeschwindigkeit versehen ist.

Erfindungsgemäß ist somit ein neuartiger Schubmotor geschaffen, der eine Mischung aus einer Strahlturbine und einem bekannten Flüssigraketentriebwerk darstellt. Erfindungsgemäß werden die Vorteile von beiden bekannten Systemen kombiniert. Der erfindungsgemäße Antrieb arbeitet nach dem Rückstoßprinzip, d. h. ist mit einem Raketentriebwerk vergleichbar und nutzt dessen hohen Wirkungsgrad aus, greift jedoch zur Verbrennung der Silanöle vorzugsweise auf den in der Atmosphäre befindlichen Stickstoff zurück, so daß kein spezielles Oxidationsmittel im Flugkörper mitgeführt werden muß. Der Vorteil gegenüber einer herkömmlichen Strahlturbine besteht ferner darin, daß auf mechanische Elemente in der Brennkammer verzichtet werden kann.

Das Brennkammergehäuse ist für entsprechend hohe Drücke und Temperaturen ausgelegt. Es weist zweckmäßigerweise einen Kühlmantel auf. Die Innenkammer kann durch eine Keramik- oder Edelmetallauskleidung geschützt sein. Darüber hinaus kann das Brennkammergehäuse vorzugsweise zumindest teilweise aus Titan bestehen.

Falls für die Verbrennung nicht genügend O₂ vorhanden ist, um sämtliche H-Atome der Silanöle (Silanketten) zu verbrennen und eine ausreichend hohe Temperatur für die Aufspaltung des N₂-Moleküles zu erreichen, muß ggf. O₂ der Brennkammer zugeführt werden, vorzugsweise als Stickoxid. O₂ wirkt hierbei als "Zündmedium" für die nachfolgende N-Reaktion.

Ansonsten erfolgt die Brennstoffzufuhr in die Brennkammer vorzugsweise automatisch in Abhängigkeit vom Druck und der Temperatur der Brennkammer.

Die Silanöle werden der Brennkammer vorzugsweise mit Hilfe einer geeigneten Pumpe zugeführt. Wie erwähnt, sind derartige Silanöle pumpfähig.

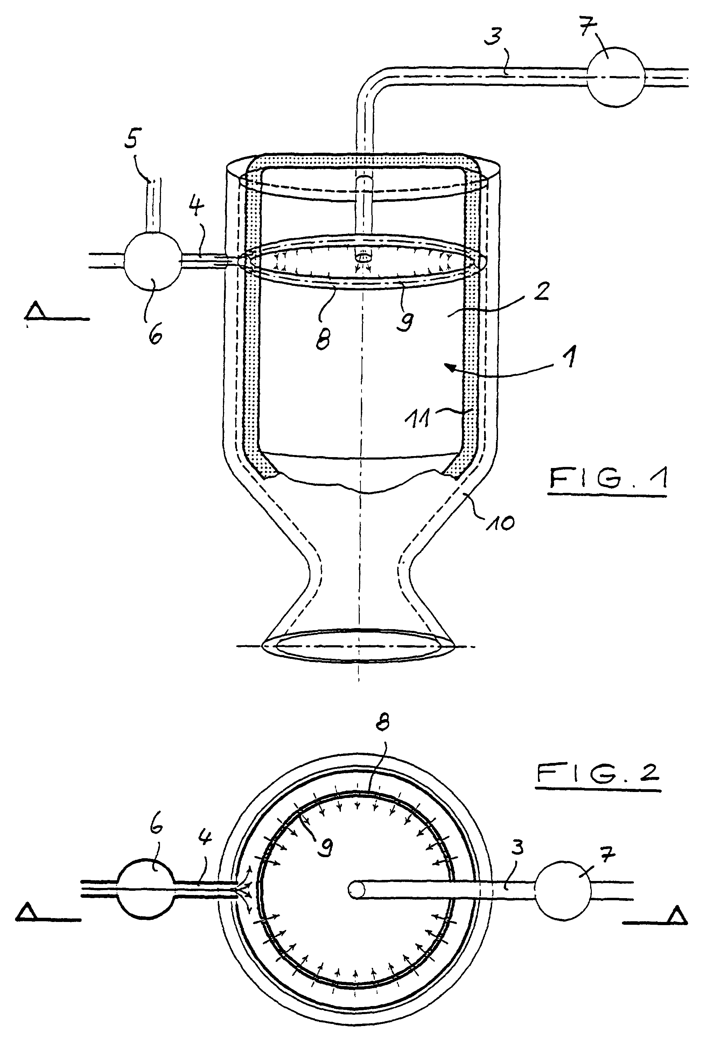

Die Erfindung wird nachfolgend anhand eines Ausführungsbeispiels in Verbindung mit der Zeichnung im einzelnen erläutert. Die Figuren zeigen schematisch den Aufbau eines Antriebs eines Flugkörpers in der Seitenansicht (durchbrochen) und im Horizontalschnitt.

Wie man den Figuren entnehmen kann, weist der Antrieb 1 eine Brennkammer 2 auf, deren Gehäuse 11 aus einem geeigneten hochtemperaturfesten Material, beispielsweise Metall oder Keramik, besteht. Vorzugsweise besteht das Gehäuse zumindest teilweise aus Titan. Das Gehäuse ist von einem geeigneten Kühlmantel 10 umgeben.

Im übrigen ist die Brennkammer wie die Brennkammer eines bekannten Raketentriebwerks ausgebildet und weist an ihrem in der Figur unteren Ende eine Austrittsöffnung auf, die mit einer entsprechenden Verengung zur Erhöhung der Geschwindigkeit der Verbrennungsgase versehen ist.

In die Brennkammer mündet einerseits eine Zuführleitung 4 für komprimierte Luft, die durch den bei 6 schematisch dargestellten Kompressor verdichtet wird. Die Zuführleitung 4 führt die komprimierte Luft in einen in der Brennkammer angeordneten Ring 8, der mit einer Vielzahl von nach innen gerichteten Düsenaustrittsöffnungen 9 versehen ist, über die die komprimierte Luft in das Innere der Brennkammer geführt wird. Des weiteren mündet in die Brennkammer eine Zuführleitung 3 für Silanöle, die über eine Pumpe 7 in die Brennkammer eingeführt werden, und zwar in das Innere des Ringes 8. Die Einführung kann dabei über eine geeignete Einspritzvorrichtung (nicht gezeigt) erfolgen.

Der Sauerstoffanteil der komprimierten Luft reagiert mit dem Wasserstoff der Silankette zur Bildung von H₂O. Bei der entsprechenden Wasserstoff-Sauerstoff-Verbrennung werden ausreichend hohe Temperaturen erreicht, um das N₂-Molekül zu spalten. Die freien Stickstoff radikale greifen nunmehr die freien Siliciumatome an, wodurch die gewünschte Stickstoffverbrennung entsteht. Es bildet sich Si₃N₄. Wenn nicht genügend Luft zur Verfügung steht, können der Brennkammer zusätzliche Stickstoffverbindungen, wie beispielsweise NO₂ oder HNO₃ zugeführt werden, wie schematisch durch die Leitung 5 angedeutet ist.

Wie vorstehend ausgeführt, werden somit bei dem erfindungsgemäßen Verfahren Stickstoff zur Reaktion mit den Silicium-Atomen und ein Oxidationsmittel zur Reaktion mit den Wasserstoffatomen der Silïciumwasserstoffverbindungen benötigt. Beide Bestandteile können den Silanölen getrennt, als Gemisch oder als Verbindung zugeführt werden. Besonders geeignet ist eine Zuführung als Gemisch, d.h. als Luft, da diese in der Atmosphäre zur Verfügung steht. Als Oxidationsmittel wird hierbei der Sauerstoff der Luft verwendet, wie vorstehend ausgeführt. Es können jedoch auch Verbindungen zugesetzt werden, um das Oxidationsmittel und den Stickstoff zu liefern. Beispielsweise können hierzu die vorstehend bereits erwähnten Stickoxide (NOₓ) eingesetzt werden, die den entsprechenden Sauerstoff als Oxidationsmittel sowie den Stickstoff liefern. Eine weitere bevorzugte Verbindung ist Tetrafluorhydrazin, welche sowohl den benötigten Stickstoff als auch das benötigte Oxidationsmittel, nämlich Fluor, liefert.

## Patentansprüche

1. Verfahren zum Betreiben eines nach dem Rückstoßprinzip arbeitenden Antriebes eines Flugkörpers, bei dem
a) der Wasserstoff von Silanölen zur Erzeugung hoher Temperaturen in Gegenwart eines Sauerstoff liefernden Oxidationsmittels zu Wasser verbrannt wird, worauf
b) bei den sich bei der Wasserbildung einstellenden hohen Temperaturen der Stickstoff der Luft und/oder mitgeführter Stickstoffverbindungen mit dem Silicium der Silanöle unter Bildung von Siliciumnitrid umgesetzt wird.

2. Verfahren nach Anspruch 1, dadurch gekennzeichnet, daß der Stickstoff der Erdatmosphäre für die Reaktion eingesetzt wird.

3. Verfahren nach Anspruch 1 oder 2, dadurch gekennzeichnet, daß der Stickstoff in der Form von komprimierter Luft zugeführt wird.

4. Verfahren nach Anspruch 2 oder 3, dadurch gekennzeichnet, daß zusätzlich zur Luft Stickstoffverbindungen zugeführt werden.

5. Verfahren nach einem der vorangehenden Ansprüche, dadurch gekennzeichnet, daß als Silanöle solche mit einer Kettenlänge von Si₅H₁₂ (Pentasilan) bis Si₉H₂₀ (Nonasilan) eingesetzt werden.

6. Verfahren nach einem der vorangehenden Ansprüche, dadurch gekennzeichnet, daß das Oxidationsmittel zur Einleitung und/oder Aufrechterhaltung der Reaktion zwischen dem Stickstoff und/oder den Stickstoffverbindungen und den Silanölen in die Brennkammer eingespeist wird.

7. Verfahren nach einem der vorangehenden Ansprüche, dadurch gekennzeichnet, daß die Zuführung der Silanöle, des Stickstoffs und/oder der Stickstoffverbindungen und/oder des Oxidationsmittels in Abhängigkeit vom Druck und der Temperatur automatisch durchgeführt wird.

8. Antrieb zur Durchführung des Verfahrens nach einem der vorangehenden Ansprüche, dadurch gekennzeichnet, daß er als Raketentriebwerk (1) ausgebildet ist und eine Brennkammer (2), eine in die Brennkammer (2) führende Zuführleitung (3) für die Silanöle, eine in die Brennkammer (2) führende Zuführleitung (4) für den Stickstoff und/oder die Stickstoffverbindungen und eine in die Brennkammer führende Zuführleitung für das Oxidationsmittel aufweist.

9. Antrieb nach Anspruch 8, dadurch gekennzeichnet, daß die Zuführleitung (4) für den Stickstoff und/oder die Stickstoffverbindungen und/oder das Oxidationsmittel an eine Quelle komprimierter Luft angeschlossen ist.

10. Antrieb nach Anspruch 8 oder 9, dadurch gekennzeichnet, daß der Stickstoff und/oder die Stickstoffverbindungen und/oder das Oxidationsmittel ringförmig in die Brennkammer (2) eingespeist werden.

11. Antrieb nach einem der Ansprüche 8 bis 10, dadurch gekennzeichnet, daß die Brennkammer (2) einen Kühlmantel (10) aufweist.

12. Antrieb nach einem der Ansprüche 8 bis 11, dadurch gekennzeichnet, daß das Brennkammergehäuse zumindest teilweise aus Titan besteht.

## Claims

1. A process for operating a reaction-type missile propulsion system according to which
a) the hydrogen of silane oils is combusted to produce water in the presence of an oxidizing agent supplying oxygen for the generation of high temperatures, whereupon
b) the nitrogen of the air and/or of nitrogen compounds carried along by the missile are reacted with the silicon of the silane oils for the generation of silicon nitride at the high temperatures occuring at the generation of water.

2. The process according to claim 1, characterized in that the nitrogen of the atmosphere of the earth is used for the reaction.

3. The process according to claim 1 or 2, characterized in that the nitrogen is supplied as compressed air.

4. The process according to claim 2 or 3, characterized in that nitrogen compounds are supplied in addition to the air.

5. The process according to one of the preceding claims, characterized in that silane oils having a chain length of Si₅H₁₂ (pentasilane) to Si₉H₂₀ (nonasilane) are used.

6. The process according to one of the preceding claims, characterized in that the oxidizing agent is introduced into the combustion chamber for the initiation and/or maintenance of the reaction between the nitrogen and/or the nitrogen compounds and the silane oils.

7. The process according to one of the preceding claims, characterized in that the supply of the silane oils, the nitrogen and/or the nitrogen compounds and/or the oxidizing agent is carried out automatically in response to pressure and temperature.

8. A propulsion system for carrying out the process according to one of the preceding claims, characterized in that it is formed as rocket propulsion unit (1) and includes a combustion chamber (2), a supply line (3) for the silane oils leading into the combustion chamber (2), a supply line (4) for the nitrogen and/or the nitrogen compounds leading into the combustion chamber (2) and a supply line for the oxidizing agent leading into the combustion chamber.

9. The propulsion system according to claim 8, characterized in that the supply line (4) for the nitrogen and/or the nitrogen compounds and/or the oxidizing agent is connected to a source of compressed air.

10. The propulsion system according to claim 8 or 9, characterized in that the nitrogen and/or the nitrogen compounds and/or the oxidizing agent are introduced into the combustion chamber (2) annularly.

11. The propulsion system according to one of the claims 8 to 10, characterized in that the combustion chamber (2) has a cooling jacket (10).

12. The propulsion system according to one of the claims 8 to 11, characterized in that the combustion chamber housing consists at least partly of titanium.

## Revendications

1. Procédé d'utilisation d'un entraînement de corps volant travaillant suivant le principe de la poussée vers l'arrière, dans lequel
a) l'hydrogène de silanols est brûlé en présence d'un agent d'oxydation délivrant de l'oxygène pour fournir de l'eau en créant de hautes températures, et
b) aux hautes température qui s'établissent par formation d'eau, l'azote de l'air et/ou de composés d'azote amenés conjointement réagit avec le silicium des silanols pour former du nitrure de silicium.

2. Procédé selon la revendication 1, caractérisé en ce que pour la réaction, on utilise l'azote de l'atmosphère terrestre.

3. Procédé selon la revendication 1 ou 2, caractérisé en ce que l'azote amené sous la forme d'air comprimé.

4. Procédé selon la revendication 2 ou 3, caractérisé en ce qu'en plus d'air, on amène des composés d'azote.

5. Procédé selon l'une des revendications précédentes, caractérisé en ce que l'on utilise comme silanols des silanols présentant une chaîne d'une longueur de Si₅H₁₂ (pentasilane) à Si₉H₂₀ (nonasilane).

6. Procédé selon l'une des revendications précédentes, caractérisé en ce que l'agent d'oxydation utilisé pour induire et/ou maintenir la réaction entre l'azote et/ou les composés azotés et les silanols est introduit dans la chambre de combustion.

7. Procédé selon l'une des revendications précédentes, caractérisé en ce que l'apport de silanols, d'azote et/ou de composés d'azote et/ou d'agent d'oxydation s'effectue automatiquement sous la dépendance de la pression et de la température.

8. Entraînement en vue de la mise en oeuvre du procédé selon l'une des revendications précédentes, caractérisé en ce qu'il est configuré comme moteur-fusée (1) et présente une chambre de combustion (2), un conduit d'amenée (3) qui conduit les silanols dans la chambre de combustion (2), un conduit d'amenée (4) qui conduit l'azote et/ou les composés d'azote dans la chambre combustion (2) et un conduit d'air qui conduit l'agent d'oxydation dans la chambre de combustion.

9. Entraînement selon la revendication 8, caractérisé en ce que les conduits d'amenée (4) de l'azote et/ou des composés d'azote et/ou de l'agent d'oxydation sont raccordés à une source d'air comprimé.

10. Entraînement selon la revendication 8 ou 9, caractérisé en ce que l'azote et/ou les composés d'azote et/ou l'agent d'oxydation sont introduits dans la chambre de combustion (2) suivant un anneau.

11. Entraînement selon l'une des revendications 8 à 10, caractérisé en ce que la chambre de combustion (2) présente une enveloppe de refroidissement (10).

12. Entraînement selon l'une des revendications 8 à 11, caractérisé en ce que le boîtier de la chambre de combustion est réalisé au moins en partie en titane.
